# EUROPÄISCHE PATENTANMELDUNG

(11) **EP 3 323 550 A2**
(43) Veröffentlichungstag der Anmeldung: **23.05.2018**
(21) Anmeldenummer: 17202693.2
(22) Anmeldetag: 21.11.2017
(51) Int. Cl.: B23Q 1/00

(54) **VERBINDUNGSVORRICHTUNG FÜR EINE MOTORISCH ANGETRIEBENE WERKZEUGMASCHINENEINHEIT**

(30) Priorität: 22.11.2016 DE 102016122537
(71) Anmelder: Kessler Energy GmbH, 88422 Bad Buchau (DE)
(72) Erfinder: Gerst, Manuel, 88400 Biberach an der Riss (DE); Schmid, Gerold, 88527 Unlingen (DE)
(74) Vertreter: Otten, Roth, Dobler & Partner mbB Patentanwälte

(57) **Zusammenfassung**

Verbindungsvorrichtung (2) einer Sensorauswerteeinheit und/oder einer elektrischen Energieversorgung zum elektrisch leitenden Verbinden der Sensorauswerteeinheit und/oder der Energieversorgung mit wenigstens einem Statorsensors und/oder wenigstens einem Spulenanschluss über eine weitere, erste Verbindungsvorrichtung (4, 5, 9, 10) einer Statoreinheit einer motorisch angetriebenen Werkzeugmaschineneinheit wie eines Mehrachsendrehkopfs, einer Motorspindel, eines Drehtischs oder dergleichen, wobei die Werkzeugmaschineneinheit die einen elektromagnetischen Stator (1) umfassende Statoreinheit und eine wenigstens eine um eine Drehachse drehbare Rotorwelle aufweisende Rotoreinheit (14) umfasst, wobei die Verbindungsvorrichtung (2) der Sensorauswerteeinheit und/oder der elektrischen Energieversorgung eine Elektronikeinheit (30) zur Verarbeitung und/oder Umwandlung von Signalen des wenigstens einen Statorsensors (50) und/oder des wenigstens einen Spulenanschlusses aufweist, wobei insbesondere die Verbindungsvorrichtung (2) ein Gehäuse umfasst, in welches die Elektronikeinheit und/oder wenigstens teilweise die elektrischen Verbindungen des Spulenanschlusses integriert ist/sind.

## Beschreibung

Die Erfindung betrifft eine Verbindungsvorrichtung, insbesondere einen Stecker, nach dem Oberbegriff des Anspruchs 1 sowie eine Sensorauswerteeinheit bzw. eine Energieversorgungseinheit nach den Oberbegriffen der Ansprüche 10 bzw. 11. Außerdem betrifft die Erfindung eine motorisch angetriebene Werkzeugmaschineneinheit wie einen Mehrachsendrehkopf, eine Motorspindel, einen Drehtisch oder dergleichen mit einer einen elektromagnetischen Stator umfassenden Statoreinheit und einer wenigstens eine um eine Drehachse drehbare Rotorwelle aufweisende Rotoreinheit nach dem Oberbegriff des Anspruchs 12.

### Stand der Technik

Motorspindeln oder Drehtische oder dergleichen werden für Werkzeugmaschinen häufig als Torquemotoren ausgebildet. Die zur Drehmomenterzeugung notwendigen Ströme bzw. elektrische Energie werden über Kabel dem Elektromotor zugeführt. Die Kabel werden meistens über viele Meter durch die Werkzeugmaschine bzw. zu einer elektrischen Energiequelle geführt. Hierfür werden die Spulenenden des elektromagnetischen Antriebssystems mit elektrischen Anschlusskabeln an einer Verbindungsstelle verbunden.

Die Verbindungsstelle zwischen elektrischem Anschlusskabel und elektrischen Spulen des Motors werden in unterschiedlicher Weise derzeit ausgeführt. So werden einerseits diese Verbindungsstellen unmittelbar an den Spulen mit den elektrischen Anschlusskabeln unlösbar verbunden, wobei in einem nachfolgenden Herstellungsprozessschritt die Spulen einschließlich dieser unlösbaren Verbindungsstelle vielfach mittels einer Gussmasse umgossen werden. Diese Gussmasse umschließt nach dem Aushärten die Spulen und bildet zum Teil die Innenwand des Stators, die dem drehbaren Rotor gegenüberliegend angeordnet ist. Auf der außenliegenden Mantelfläche der Gussmasse bzw. des Spulensystems ist meistens ein Kühlgehäuse bzw. ein Statorgehäuse angeordnet und mit dieser vergossen.

Andererseits sind bereits lösbar verbindbare Steckverbinder für entsprechende Motorspindeln bzw. Drehtische oder dergleichen bekannt. Beispielsweise sind in der DE 102 35 632 B4 der Anmelderin bereits Einzelsteckverbinder für diese elektrische Energieversorgungskabel offenbart. Hierbei wird wiederum wie oben beschrieben eine unlösbare Verbindungsstelle mit den Spulenenden vorgesehen und zudem unmittelbar am Statorgehäuse eine lösbar verbindbare Trennstelle des elektromagnetischen Antriebssystems des Stators realisiert, um die elektrische Energieversorgung bei Bedarf vom Motor zu trennen und wieder herzustellen.

Entsprechend kann die Trennstelle auch als Teil der zweiten Verbindungsvorrichtung aufgefasst werden.

Alternativ hierzu sind in den letzten Jahrzehnten vielfach Ausführungen mit einer Stromschiene in einem Anschlussgehäuse und einer mittels Schraubfixierung lösbar verbindbaren Trennstelle zur Verbindung der elektrischen Anschlusskabel mit dem elektrischen Antriebssystem des Stators im Einsatz.

Nachteilig bei den bisherigen Systemen ist jedoch, dass unter anderem bei der Herstellung entsprechender Motoren bzw. Statoren zum einen die nicht lösbaren zum Teil viele Meter langen Anschlusskabel bei nachfolgenden Herstellungsprozessschritten wie beispielsweise beim Vergießen der Spulen, Anbringen bzw. Justage des Statorgehäuses erheblich stören. Entsprechendes trifft auch auf die Ausführungen mit Stromschienen bzw. Anschlussgehäuse oder Steckverbinder etc. zu, da diese außen am Stator bzw. Statorgehäuse angeordnet sind und bei einzelnen Herstellungsprozessschritten oder der Montage bzw. Demontage erheblich stören.

Darüber hinaus ist die Abdichtung der lösbar verbindbaren Trennstelle mit erheblichem Aufwand verbunden bzw. bei einzelnen Ausführungsformen nur unbefriedigend oder gar nicht realisierbar. Eine Abdichtung des Stators gegenüber Spritzwasser bzw. Kühlschmiermitteln oder dergleichen ist jedoch gerade bei Werkzeugmaschinenanwendungen von großer Bedeutung.

### Aufgabe und Vorteile der Erfindung

Aufgabe der Erfindung ist es demgegenüber, eine elektromotorisch angetriebene Werkzeugmaschineneinheit wie ein Mehrachsendrehkopf, eine Motorspindel, ein Drehtisch oder dergleichen vorzuschlagen, die die Nachteile des Stands der Technik beseitigt.

Diese Aufgabe wird, ausgehend von einer Werkzeugmaschineneinheit, einer Verbindungsvorrichtung bzw. einer Sensorauswerte- bzw. Energieversorgungseinheit der einleitend genannten Art, durch die Merkmale der Ansprüche 1, 10, 11 bzw. 12 gelöst. Durch die in den Unteransprüchen genannten Maßnahmen sind vorteilhafte Ausführungen und Weiterbildungen der Erfindung möglich.

Dementsprechend sind bei einer erfindungsgemäßen Werkzeugmaschineneinheit die lösbar verbindbare Trennstelle und/oder die erste Verbindungsvorrichtung innerhalb der Kontur des Stators angeordnet.

Die erfindungsgemäße Verbindungsvorrichtung einer Sensorauswerteeinheit und/oder einer elektrischen Energieversorgung passt entsprechend als Gegenstück zur ersten Verbindungsvorrichtung am Stator und ist vorzugsweise als Stecker ausgebildet. Zur besseren Unterscheidbarkeit wird die erfindungsgemäße Verbindungsvorrichtung daher in ihrer Eigenschaft als Gegenstück zur (ersten) Verbindungsvorrichtung des Stators als zweite Verbindungsvorrichtung bezeichnet.

Die Anordnung der lösbar verbindbaren Trennstelle bzw. der ersten Verbindungsvorrichtung innerhalb der Kontur bzw. innerhalb der Umrisslinie des Stators, insbesondere innerhalb des Statorgehäuses, verbessert die Herstellung des Stators sowie die Möglichkeit einer Abdichtung des Stators bzw. der Werkzeugmaschineneinheit in erheblichem Maß.

Als Stator im Sinn der Erfindung wird eine Baueinheit der Statoreinheit verstanden, die zumindest das elektromagnetische Antriebssystem umfasst, insbesondere die Antriebsspulen und Motorbleche. Der Stator bzw. die Baueinheit weist eine äußere und eine innere, konzentrische Mantelfläche und zwei im Wesentlichen planparallele Stirnseiten auf bzw. weist zumindest eine zu wenigstens einer oder beiden Mantelflächen orthogonal ausgerichtete Stirnseite auf.

Optional umfasst diese Baueinheit an der äußeren Mantelfläche beispielsweise ein Kühlgehäuse und/oder ein Statorgehäuse und an einer oder beiden Stirnseiten vorzugsweise je ein planes Ringelement bzw. eine plane Stirnfläche. Stirnseitig können jedoch auch das Kühlgehäuse und/oder das Statorgehäuse eine oder beide plane Stirnflächen des Stators umfassen.

So ist vorteilhafterweise der Stator im Wesentlichen als Zylinderring ausgebildet. Die Planparallelität der Stirnseiten sowie die Konzentrizität bzw. Parallelität der beiden Mantelflächen und/oder die orthogonale Ausrichtung einer oder beider Stirnseiten in Bezug auf eine oder beide Mantelflächen des Stators sind in Werkzeugmaschinen für deren Bearbeitungsgenauigkeit von entscheidender Bedeutung.

Die Kontur bzw. der Umriss oder eine betreffende Querschnittsfläche des Stators im Sinn der Erfindung wird im Wesentlichen durch die Stirnseiten bzw. Stirnflächen und die Mantelflächen des Stators bzw. der Baueinheit definiert. Innerhalb dieser Kontur sind gemäß der Erfindung die lösbar verbindbare Trennstelle und/oder die erste Verbindungsvorrichtung angeordnet.

Die Statoreinheit umfasst neben dem Stator bzw. dieser Baueinheit zudem auch weitere Komponenten wie z.B. die Lagerung der Rotorwelle, die zweite Verbindungsvorrichtung bzw. ein Anschlussstecker und ggf. weitere Komponenten des Kühlsystems oder ggf. Montageflansche/-elemente etc.

Gemäß der Erfindung sind keine störenden, meterlangen Anschlusskabel bei der Fertigstellung des Stators und auch keine überstehenden bzw. auskragenden Teile der ersten Verbindungsvorrichtung der Trennstelle notwendig, sodass beim Handling des Stators eine Beschädigung bzw. Beeinträchtigung durch diese bzw. von diesen wirkungsvoll verhindert ist.

Zudem wird auch die exakte Endbearbeitung und Justage des Stators erfindungsgemäß verbessert. So kann beispielsweise ein Kühlgehäuse und/oder ein Statorgehäuse mittels spanbearbeitender Verfahren nach-/endbearbeitet werden, ohne dass überstehende Teile die Positionierung des Stators hierbei stören. Somit kann eine exakte Bearbeitung bzw. Herstellung der gewünschten Form des Stators und somit eine exakte Ausrichtung/Positionierung des Stators im eingebauten Zustand verwirklicht werden. Bei modernen Werkzeugmaschinen ist die Exaktheit der Ausformung des Stators bzw. der Werkzeugmaschineneinheit für den späteren Einsatz von entscheidender Bedeutung. Gerade hier sind ständig steigende Anforderungen zu erfüllen.

Neben der Funktonalität der Herstellung einer elektrischen Verbindung kann die zweite Verbindungsvorrichtung aber auch noch weitere Funktionalitäten übernehmen, welche im vorliegenden Fall von einer Elektronikeinheit ausgeführt werden. Die Elektronikeinheit ist dazu über die erste Verbindungsvorrichtung mit einem oder mehreren Statorsensoren bzw. Spulenanschlüssen verbunden und kann die auf diese Weise erhaltenen Signale verarbeiten bzw. umwandeln. Mit dieser Maßnahme kann eine besonders kompakte Bauform erreicht werden und ohnehin nicht benötigter Platz vor allem für zusätzliche sicherheitsrelevante Funktionen genutzt werden.

Besonders vorteilhaft ist es daher, bei einer Ausführungsform die Elektronikeinheit unmittelbar in ein Gehäuse der zweiten Verbindungsvorrichtung zu integrieren, da auf diese Weise eine besondere kompakte und zusammenhängende Bauform ermöglicht wird. Insbesondere kann die zweite Verbindungsvorrichtung somit als kompakter Stecker ausgeführt sein, der mit der ersten Verbindungsvorrichtung verbindbar ist. Dieser Stecker bzw. dessen Gehäuse kann gegenüber außen abgedichtet und/oder thermisch und/oder elektrisch isoliert sein. Die Elektronikeinheit kann Daten bzw. Messdaten gegebenenfalls selbst verarbeiten oder zur Verarbeitung z. B. an eine Kontrolleinheit bzw. Steuerung weiterleiten.

Im Allgemeinen können sehr schnelle Temperaturanstiege wegen vorhandener Totzeiten dazu führen, dass es zu thermischen Zerstörungen der Motorisolation kommt, ohne dass der Strom durch den Umrichter rechtzeitig abgeschaltet wird. In vorteilhafter Weise kann es sich bei entsprechenden Statorsensoren bei einer Ausführungsform der Erfindung um Temperatursensoren handeln, vor allem um solche, die ein kontinuierliches Messen ermöglichen. Gerade bei mehrphasigen (z.B. 3-phasigen) Werkzeugmaschineneinheiten kann für jede Wicklung ein Temperatursensor vorgesehen sein. Die Temperatursensoren können z.B. in den Stator integriert sein.

Bei einem Ausführungsbeispiel können als Temperatursensoren zum Beispiel Thermowiderstände eingesetzt werden, bei welchen der Widerstand abhängig von der Temperatur ist. Über eine bekannte Zuordnung, die vom Thermowiderstand abhängt, kann jedem Widerstandswert des Sensors somit ein Temperaturwert zugeordnet werden. In vorteilhafter Weise kann die Elektronikeinheit bei einer Weiterbildung der Erfindung somit auch als Signalkonverter bzw. als Datenkonverter genutzt werden. Dies gilt grundsätzlich für alle Arten von Signalen oder Daten, die der Elektronikeinheit zugeführt werden, z. B. können auch beliebige andere Signale von Sensoren umgewandelt werden.

Auswerteschaltungen oder sonstige Kontrollvorrichtungen messen den Widerstandswert des Thermowiderstandes und ordnen diesem eine Temperatur zu. Diese Methode besitzt den Nachteil, dass beim Austauschen derartiger Sensoren sehr genau darauf geachtet werden muss, ob ein Thermowiderstand mit derselben Widerstand-Temperatur-Charakteristik verwendet wird. Soll aber der Sensor durch einen anderen Sensortyp ersetzt werden, kann gemäß einem Ausführungsbeispiel der Erfindung die Elektronikeinheit die Signaldaten des Sensors passend konvertieren, sodass diese von der entsprechenden Kontrollvorrichtung bzw. Auswerteschaltung korrekt verarbeitet werden können.

Bei einer Ausführungsvariante kann die Elektronikeinheit dazu den Widerstand des bzw. der Statorsensoren messen und diesen in einen Temperaturwert umwandeln. In der Regel existiert eine Kontrollvorrichtung bzw. Auswerteschaltung, welche mit dem Thermowiderstand üblicherweise verbunden ist und dessen Widerstandswert misst, um ihn in einen Temperaturwert umzuwandeln. In vorteilhafter Weise kann die Elektronikeinheit einen Ausgangsschaltkreis umfassen, dessen Widerstandswert entsprechend so durch den Mikrocontroller bzw. die Elektronikeinheit anpassbar ist, als läge ein bestimmter anderer Thermowiderstand vor. Kontrollvorrichtung bzw. Auswerteschaltung ist an diesen Ausgangsschaltkreis angeschlossen, misst dessen Widerstand und berechnet so ihrerseits den entsprechenden Temperaturwert, da diese Umrechnung von der Kennlinie des angenommenen bzw. tatsächlich vorhandenen Thermowiderstands abhängt.

Auch eine sensorische Erfassung von Korrosion ist bei einer Ausführungsform der Erfindung möglich, indem z. B. eine Trennstelle dahingehend vermessen wird, ob eine Temperaturerhöhung oder eine Widerstandserhöhung dort auftritt. Ein infolge von Korrosion erhöhter Widerstand führt zu Verlusten, die entsprechend an diesen Stellen gemessen werden können (durch unmittelbare Messung des Widerstandes oder der daraus resultierenden Erwärmung). Dieses Ausführungsbeispiel ermöglicht daher vorteilhafterweise an kritischen Stellen vorherzusagen, ob bzw. gegebenenfalls wann eine Wartung notwendig wird. Diese sensorische Erfassung kann somit auch den Beginn eines Korrosionsprozesses anzeigen, sodass abgeschätzt werden kann, wann spätestens eine deutliche Beeinträchtigung erfolgt sein wird.

Die Elektronikeinheit kann zum Beispiel als Mikrocontroller ausgebildet sein, da sich ein solcher aufgrund seines geringen Bauraumbedarfs sehr gut einbauen lässt. In vorteilhafter Weise ist ein Mikrocontroller für verschiedene Thermowiderstande einsetzbar und kann je nach benötigter Kennlinie, mit der einem Widerstandswert des Thermowiderstands eine Temperatur zugeordnet wird, auch entsprechend programmiert werden. Die Kompatibilität zu anderen Systemen kann hierdurch sichergestellt sein. Einzelne Komponenten können somit auch als separate Bauteile vertrieben werden.

Auch eine Umwandlung der Werte in Echtzeit (real time) ist möglich, sodass auch sehr kurze Signale und auch Störungen wie rasche Temperaturanstiegen oder Spannungspeaks erfasst werden können. Eine solche Echtzeiterfassung ist vorteilhaft, da bei Auftreten solcher Temperaturanstiege oder Überspannungen rasch eine Korrektur erfolgen muss, entweder durch Begrenzen oder Dämpfen von Spannungsspitzen oder durch Abschalten der Maschine. Zu diesem Zweck kann die Elektronikeinheit, sofern diese nicht selbst die Begrenzung, Dämpfung oder das Abschalten durchführt, mit einer Kontrollvorrichtung der Werkzeugmaschineneinheit verbunden sein und entsprechende Daten, Parameter oder Befehle an diese weiterleiten, sodass die Kontrollvorrichtung die Steuerung und/oder Regelung der Werkzeugmaschineneinheit vornimmt.

Neben einer sensorischen Temperaturerfassung können, wie bereits zuvor beschrieben, in der Elektronikeinheit auch andere Funktonen implementiert werden. In elektrischen Antriebssystemen können zum Beispiel Spannungsspitzen, etwa aufgrund von Resonanzerscheinungen, auftreten und zu Schäden an der Werkzeugmaschineneinheit führen; derartige Spannungsspitzen können entkoppelt bzw. abgeschnitten werden.

Auch können generatorische Spannungen begrenzt werden.

Die Elektronikeinheit kann die Messdaten bzw. die gewonnen Daten selbst aufbereiten oder an eine weitere Kontrollvorrichtung übermitteln. Um die Größe der Elektronikeinheit so zu gestalten, dass diese in das entsprechende Gehäuse integrierbar ist, kann die eigentliche Kontrollvorrichtung zur Steuerung und/oder Regelung der Werkzeugmaschinenvorrichtung auch extern ausgegliedert sein. Je nach Funktion werden sodann einfache Messdaten, aber auch bereits verarbeitete Kontrollparameter oder sogar Kontrollbefehle an die Kontrollvorrichtung weitergeleitet.

Zum Umwandeln von Signalen, insbesondere in Widerstandswerte einer Ausgangsschaltung, kann ein digitales Potentiometer verwendet werden, das sehr viel präziser arbeitet als eine mechanische Variante und sehr verlässig arbeitet.

Auch die Möglichkeit der Abdichtung wird durch die Erfindung wesentlich verbessert. So kann eine vorteilhafte Abdichtung durch den Stator bzw. das Statorgehäuse realisiert werden.

Vorteilhafterweise ist die lösbar verbindbare Trennstelle und/oder die erste Verbindungsvorrichtung innerhalb einer Stirnseite und innerhalb einer Mantelfläche des Stators angeordnet. Vorzugsweise weist der Stator ein Kühl- und/oder Statorgehäuse auf, das die Mantelfläche des Stators bildet. Zudem weist der Stator vielfach als stirnseitige Abgrenzung bzw. Stirnfläche eine Platte oder dergleichen auf.

Weiterhin kann beispielsweise innerhalb des Statorgehäuses eine Kühlvorrichtung angeordnet werden, die beispielsweise ein Kühlgehäuse aufweist, das mit dem Statorgehäuse vorteilhafte Kühlkanäle ausbildet. Vorzugsweise ist die lösbar verbindbare Trennstelle und/oder die erste Verbindungsvorrichtung innerhalb des Statorgehäuses und/oder innerhalb des Kühlgehäuses und/oder innerhalb der stirnseitigen Platte bzw. Stirnfläche angeordnet.

Vorteilhafterweise weist die lösbar verbindbare Trennstelle und/oder die erste Verbindungsvorrichtung keinen Überstand bzw. keine Auskragung über eine Außenseite und/oder Mantelfläche und/oder Stirnseite des Stators auf. Hierdurch wird die erste Verbindungsvorrichtung bereits bei der Herstellung wirkungsvoll vor Beschädigung geschützt. Andererseits wird wirkungsvoll verhindert, dass überstehende Teile bzw. Komponenten der ersten Verbindungsvorrichtung bzw. der Trennstelle bei der Herstellung des Stators sich störend auf einzelne, nachfolgende Herstellungsprozessschritte auswirken könnten.

Darüber hinaus wird durch die vorteilhafte Trennstelle gemäß der Erfindung erreicht, dass beispielsweise bei der Montage oder Demontage der erfindungsgemäßen Werkzeugmaschineneinheit das aufwendige Einziehen bzw. Demontieren der meterlangen Anschlusskabel wie beim Stand der Technik entfällt. Auch steht kein überstehendes Anschlussgehäuse wie bei einem anderen Stand der Technik über die Kontur des Stators bzw. des Statorgehäuses und/oder dessen Stirnseite hinaus, was bei beengten Platzverhältnissen in modernen Werkzeugmaschinen von großem Vorteil ist.

Darüber hinaus kann die vorteilhaft angeordnete Trennstelle wirkungsvoll abgedichtet werden, sodass nicht nur der elektrische Anschluss der Werkzeugmaschineneinheit besser abdichtbar ist, sondern hierdurch die gesamte Werkzeugmaschineneinheit gegenüber eindringender Flüssigkeit wesentlich besser abdichtbar ist. Dies ist gerade durch den Einsatz von Kühlschmiermittel oder dergleichen bei Werkzeugmaschinenanwendungen wie Drehtische oder Motorspindeln von erheblichem Vorteil.

Vorzugsweise weist der Stator wenigstens eine elektromagnetische Spule, vorteilhafterweise zahlreiche elektromagnetische Spulen auf. Vorzugsweise weist die Rotoreinheit bzw. der Rotor wenigstens ein Permanentmagnet bzw. zahlreiche Permanentmagnete auf. Hierdurch entfällt die elektromagnetische Energieversorgung der Rotoreinheit, sodass ausschließlich der Stator eine elektrische Energieversorgung bzw. Anschlusskabel aufweist. Dementsprechend kann durch eine wirkungsvolle Abdichtung der elektrischen Energieversorgung des Stators die Abdichtung der gesamten Werkzeugmaschineneinheit verbessert werden, vor allen durch eine Verbesserung der Abdichtbarkeit der lösbar verbindbaren Trennstelle.

In einer vorteilhaften Variante der Erfindung ist ein verfestigtes und/oder erhärtetes Gusselement wenigstens teilweise an der ersten Verbindungsvorrichtung angeordnet und/oder ist ein verfestigtes und/oder erhärtetes Gusselement wenigstens teilweise als Ummantelung der ersten Verbindungsvorrichtung ausgebildet. Hiermit wird erreicht, dass die erste Verbindungsvorrichtung gegenüber dem Inneren des Stators bzw. im Inneren des Stators wirkungsvoll und vollständig abgedichtet ist. Durch das im flüssigen Zustand des Gusselementes vollständige und umfassende Anliegen der Gussflüssigkeit und dem nachfolgenden Verfestigen bzw. Aushärten der Gussflüssigkeit wird ein vorteilhaftes flächiges Abdichten der ersten Verbindungsvorrichtung nach innen verwirklicht. So wird eine besonders vorteilhafte Abdichtung der ersten Verbindungsvorrichtung gegenüber dem Gusselement bzw. gegenüber dem Innenraum des Stator erreicht. Durch diese vorteilhafte Ausführungsform der Erfindung kann eine hohe Anforderung an die Dichtigkeit der Trennstelle erfüllt werden. Eine besonders dichte Trennstelle kann eine vollständige Dichtigkeit des gesamten Motors bzw. der Werkzeugmaschineneinheit gewährleisten. Hierdurch kann beispielsweise die IP-Schutzklasse IP67 oder sogar IP68 erfüllt werden. Hierdurch können neuartige Anwendungsmöglichkeiten für eine erfindungsgemäße Werkzeugmaschineneinheit realisiert werden.

Vorzugsweise ist das Gusselement als elektrische Isolationsschicht zum elektrischen Isolieren wenigstens einer elektromagnetischen Spule bzw. der elektromagnetischen Antriebskomponenten ausgebildet. Hierdurch wird die Herstellung des erfindungsgemäßen Stators in vorteilhafter Weise verbessert. So kann die Spule bzw. die Spulen des Stators in einem Arbeitsschritt umgossen werden, wobei gleichzeitig die erste Verbindungsvorrichtung ebenfalls umgossen und somit in vorteilhafter Weise abgedichtet wird. Zugleich kann hierbei auch ein vorteilhaftes Kühlgehäuse und/oder Statorgehäuse mittels der Gussflüssigkeit vergossen und entsprechend abgedichtet werden. So werden in vorteilhafter Weise nicht nur die Spulen, sondern auch die erste Verbindungsvorrichtung sowie gegebenenfalls das Kühlgehäuse bzw. Statorgehäuse fest fixiert und zugleich wirkungsvoll abgedichtet.

In einer besonderen Weiterbildung der Erfindung weist die erste und/oder zweite Verbindungsvorrichtung wenigstens ein Dichtelement zum flüssigkeitsdichten Abdichten auf. Beispielsweise ist das Dichtelement als O-Ring oder dergleichen ausgebildet. Hiermit wird in vorteilhafter Weise eine vollständig dichte Trennstelle realisierbar. So ist die erste Verbindungsvorrichtung einerseits durch das vorteilhafte Gusselement nach innen wirkungsvoll abgedichtet und mit dem vorteilhaften Dichtelement gegenüber der zweiten Verbindungsvorrichtung oder einem anderen Statorelement oder dergleichen nach außen abgedichtet, sodass im verbundenen bzw. zusammengesteckten Zustand eine vollständig flüssigkeitsdichte Trennstelle verwirklicht werden kann.

Vorteilhafterweise weist die erste und/oder zweite Verbindungsvorrichtung jeweils ein planes Verbindungselement auf, zum Beispiel eine ebene Metallplatte oder dergleichen. Hiermit kann beispielsweise unter Zuhilfenahme eines Dichtelementes wie eines O-Rings oder dergleichen eine vollständige flüssigkeitsdichte Abdichtung der Trennstelle in vorteilhafter Weise realisiert werden.

In einer besonderen Ausführungsform der Erfindung weist der Stator wenigstens eine zwischen der ersten und der zweiten Verbindungsvorrichtung angeordnete Zwischenplatte auf. Vorzugsweise ist die Zwischenplatte als Stirnseitenplatte ausgebildet. Eine derart vorteilhafte Begrenzung des Stators auf dessen Stirnseite mittels der vorteilhaften Zwischenplatte, die vorzugsweise als Statorgehäuseelement ausgebildet ist, kann einerseits eine Verbesserung der Steifigkeit des Stators realisiert werden. Andererseits kann die Möglichkeit der wirkungsvollen bzw. vollständigen Abdichtung des Stators gegenüber Flüssigkeiten weiter verbessert werden.

Vorzugsweise weist die Zwischenplatte auf zwei gegenüberliegenden Seitenflächen jeweils wenigstens ein Dichtelement zum Abdichten der Zwischenplatte gegenüber der ersten und/oder der zweiten Verbindungsvorrichtung auf. Beispielsweise ist eines der Dichtelemente derart ausgebildet, dass dies das Statorgehäuse über den gesamten Umfang abdichtet. Das bedeutet, dass beispielsweise ein Dichtelement als O-Ring oder dergleichen ausgebildet ist, das stirnseitig am Stator angeordnet ist und sich längs des gesamten Umfangs bzw. der gesamten Mantelumfangsfläche des Stators bzw. des Statorgehäuses und/oder des Kühlgehäuses erstreckt. Demzufolge kann der Innenraum der Werkzeugmaschineneinheit bzw. des Stators in vorteilhafter Weise vollständig durch ein derartiges Dichtelement abgedichtet werden.

Vorzugsweise weist der Stator ein Kühlgehäuse auf. Hiermit wird eine vorteilhafte Kühlung des Stators realisierbar. Beispielsweise wird das Kühlgehäuse mit der oder den Spulen sowie der ersten Verbindungsvorrichtung in einem Herstellungsprozessschritt gemeinsam vergossen. Vorzugsweise ist das Kühlgehäuse wenigstens teilweise als Ummantelung des Gusselementes ausgebildet.

In einer besonderen Weiterbildung der Erfindung weist das Kühlgehäuse und/oder eine Stirnseite des Kühlgehäuses wenigstens eine sich über den gesamten Umfang erstreckende, durchgängige Dichtfläche auf. Hierdurch kann der Stator bzw. das Kühlgehäuse vollständig flüssigkeitsdicht abgedichtet werden. Beispielsweise mit Hilfe eines O-Rings oder dergleichen wird eine vollständige Abdichtung des Stators mit Hilfe des Kühlgehäuses bzw. dessen die Stirnseite und/oder alternativ oder in Kombination hierzu mittels des Statorgehäuses bzw. dessen Stirnseite verwirklicht.

In einer besonderen Ausführungsform der Erfindung wird eine Abschlussplatte vorgesehen, die eine Stirnseite des Stators wenigstens teilweise abdeckt. Diese Abschlussplatte kann verschiedene Funktionen in sich vereinen.

So kann durch den Einsatz der Abschlussplatte der Motor komplett gekapselt in die jeweilige Umgebungskonstruktion (zum Beispiel Drehtisch oder Mehrachsendrehkopf) eingebunden werden und ist somit dicht gegen Flüssigkeiten und Staub geschützt, insbesondere auf der Seite des Kabelabgangs. Hierzu wird die Abschlussplatte gegen die Stirnfläche des Stators mit einer Dichtung, beispielsweise einem O-Ring abgedichtet. Auf der anderen Seite der Abschlussplatte werden die Stecker, die als Anschlussleiste dienende Zwischenplatte sowie der Anschluss etwaiger Signal- und/oder Sensorleitungen ebenso gegenüber der Abschlussplatte abgedichtet.

Die Abschlussplatte kann auch zur Befestigung des Motors in der Umgebungskonstruktion und somit zur Kraft- beziehungsweise Drehmomentübertragung an die Umgebungsbauteile genutzt werden.

Schließlich ist die Ausgestaltung der Abschlussplatte, insbesondere deren Dicke variabel und kann an die Erfordernisse der Umgebungskonstruktion des Motors angepasst werden. Eine zuverlässige Kontaktierung der Stecker bei unterschiedlich dicken Abschlussplatten kann dabei durch variable Eintauchtiefen der Stecker in die Buchsenkontakte bewirkt werden.

Generell kann als besondere Ausführungen der Erfindung z.B. eine Serie von vorteilhaften Werkzeugmaschineneinheiten als sogenannte Modulbau-Motoren, insb. als Torquemotoren, ausgebildet werden. So sind in vorteilhafter Weise gleichartig aufgebaute, jedoch unterschiedlich groß dimensionierte Motoren herstellbar, wobei diese sich v.a. in Bezug auf die Statordurchmesser und/oder der in Richtung Drehachse bezogene Statorlänge bzw. deren Leistung unterscheiden.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische perspektivische Ansicht eines Statorrings mit Anschlussstecker,
- Figur 2: eine schematische perspektivische Ansicht des Statorrings gemäß Figur 1 ohne Anschlussstecker,
- Figur 3: einen schematischen Schnitt durch einen Statorring gemäß Figur 2 mit Anschlussstecker und zusätzlicher Zwischenplatte,
- Figur 4: einen weiteren schematischen Schnitt durch den Statorring gemäß Figur 2 mit einem Sensorstecker und der zusätzlichen Zwischenplatte,
- Figur 5: eine schematische perspektivische Ansicht eines Anschlusssteckers gemäß Figur 1 bzw. 3,
- Figur 6: eine perspektivische Darstellung eines Stators mit Anschlussstecker unter Verwendung einer ersten Ausführungsform einer Abschlussplatte,
- Figur 7: eine Darstellung entsprechend Figur 6 mit einer andern Ausführungsform einer Abschlussplatte,
- Figur 8: eine Darstellung von Kennlinien zweier Thermowiderstände, sowie
- Figur 9: eine schematische Darstellung einer Datenverarbeitung durch die Elektronikeinheit.

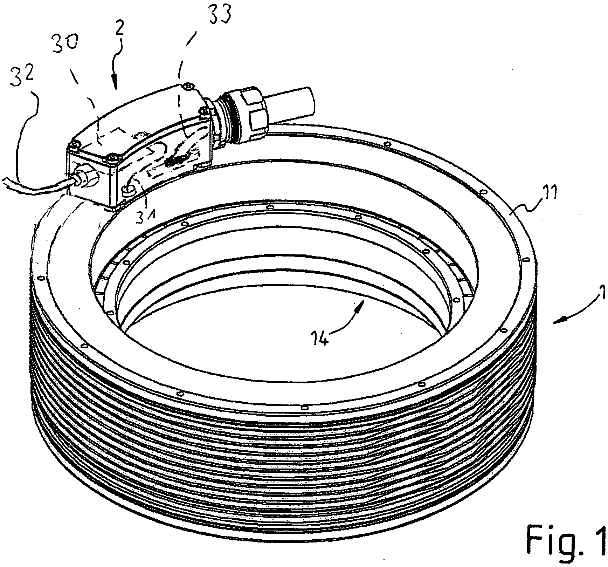

In Figur 1 ist schematisch eine perspektivische Darstellung eines erfindungsgemäßen Stators 1 mit einem montierten Stecker 2, der gleichzeitig Leistungsstecker und Sensorstecker ist, und einem Rotorring 14 mit Permanentmagneten 15 dargestellt. Lediglich aus Gründen der Übersichtlichkeit wurde hier auf die Darstellung eines Statorgehäuses bzw. weiterer Komponenten insbesondere der Rotoreinheit verzichtet.

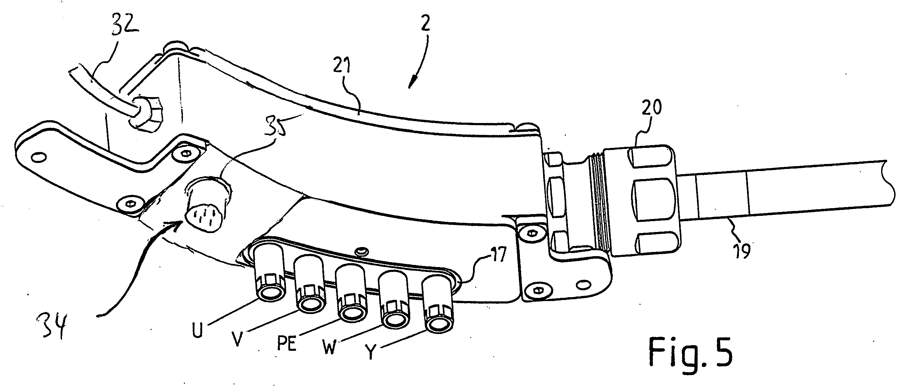

In Figur 1 ist die Elektronikeinheit 30 in Form eines Mikrocontrollers in den Stecker 2 (zweite Verbindungsvorrichtung) implementiert. Sie überwacht die Temperatursensoren, die im Stator an jeder Wicklung angebracht sind und kontinuierlich die Temperatur messen, und wandelt über eine Zuordnungsvorrift in Form einer hinterlegten Kennlinie des verwendeten Thermowiderstands, welche die Beziehung zwischen gemessenem Widerstand und Temperatur beschreibt, die Signale der Temperatursensoren um. Es wird aber im Wesentlichen kein zusätzlicher Bauraum benötigt, da die Elektronikeinheit 30 in den Stecker 2 eingebaut ist. Statorseitig ist die Elektronikeinheit 30 über ein Kabel 31 mit den Statorsensoren verbunden und bildet dort einen mehrpoligen Anschluss, wobei der Prinzipaufbau dieser statorseitigen Anschlüsse in Figur 5 eingehend dargestellt ist. Über das Kabel 32 ist die Elektronikeinheit 30 wiederum mit einer Kontrollvorrichtung zur Steuerung und/oder Regelung der Werkzeugmaschineneinheit verbunden. Das Kabel 33 dient der Stromversorgung der Statorwicklungen und bildet statorseitig die Steckeranschlüsse U, V, PE, W, Y (vgl. Figur 5).

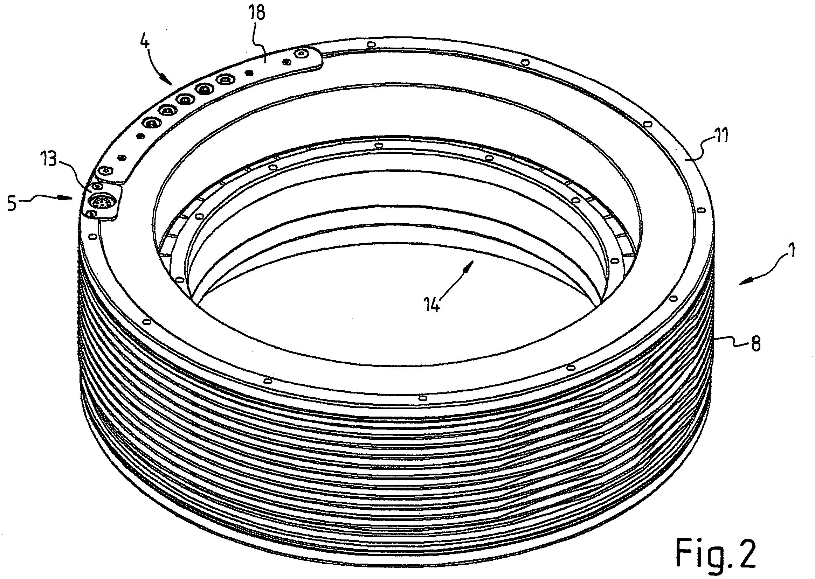

In Figur 2 ist der Stator 1 ohne die beiden Stecker 2 perspektivisch dargestellt. Zudem wird deutlich, dass der Stator 1 Steckerbuchsen 4 (erste Verbindungsvorrichtung)für die Leistungsanschlüsse 33 und für den Sensoranschluss 31 eine mehrpolige Steckerbuchse 5 (erste Verbindungsvorrichtung) aufweist. Die Steckerbuchse 5 ist mit einem Sensor, insbesondere einem Temperatursensor zur Ermittlung der Motortemperatur bzw. der Statortemperatur, im Inneren des Stators 1 verbunden.

Die Steckerbuchsen 4 sind für die elektrischen Anschlüsse U, V, PE, W sowie Y der Leistungsanschlüsse 33 vorgesehen. Diese sind im Innern des Stators 1 in vorteilhafter Weise mit Statorspulen 6 bzw. Spulenenden unlösbar verbunden, sodass im Betrieb über den Stecker 2 bzw. die Buchsen 4 der Elektromotor bzw. die Spulen 6 mit elektrischer Energie versorgt werden können, d.h. vorteilhafterweise mittels Wechselspannung.

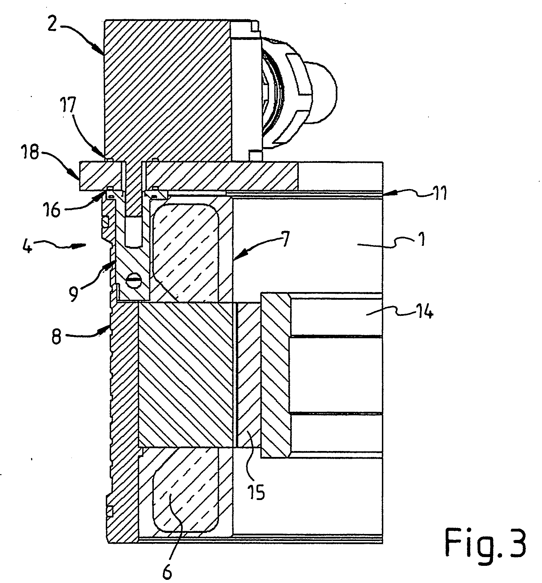

In Figur 3 ist schematisch ein Schnitt durch den Stator 1 und den Stecker 2 dargestellt. Hier sind die Spulen 6 im Schnitt schematisch dargestellt. Um die Spule 6 ist ein Verguss 7 bzw. eine Gussmasse 7 vorhanden. Dieser Verguss 7 wird bei der Herstellung des Elektroantriebs bzw. Stators 1 im flüssigen Zustand und in einer Gussform um die Spule 6 herum vergossen, wobei insbesondere ein Kühlgehäuse 8 die flüssige Vergussmasse 7 auf einer Seite bzw. Fläche begrenzt und durch das Aushärten bzw. Verfestigen der zuvor flüssigen Vergussmasse 7 mit dieser bzw. den Spulen 6 fest verbunden und zugleich abgeschlossen sowie abgedichtet wird.

In vorteilhafter Weise werden beim Vergießen der flüssigen Vergussmasse 7 zugleich die Buchsen 4 sowie 5 bzw. deren Isolationskörper 9, 10 als auch vorzugsweise ein an einer Stirnseite des Stators 1 angeordneter Statorring 11 um-/ eingegossen. Bei der in Figur 2 dargestellten Ausführungsform sind zusätzlich beim Eingießen Steckerplatten 12 am Kühlgehäuse 8 vorhanden bzw. angeschraubt und diese werden ebenfalls beim Herstellungsschritt Vergießen bzw. bei der Einbringung des noch flüssigen Vergusses 7 um-/eingegossen. Hierdurch werden die Buchsen 4, 5 gegenüber dem Stator 1 nach innen durch die an die Komponenten 4, 5, 11, 12 sowie 13 und 8 mit der Vergussmasse 7 bzw. mit dem erstarrten bzw. verfestigten Verguss 7 nicht nur fest bzw. unlösbar miteinander verbunden, sondern diese Komponenten werden zugleich nach innen wirkungsvoll und vollständig flüssigkeitsdicht abgedichtet.

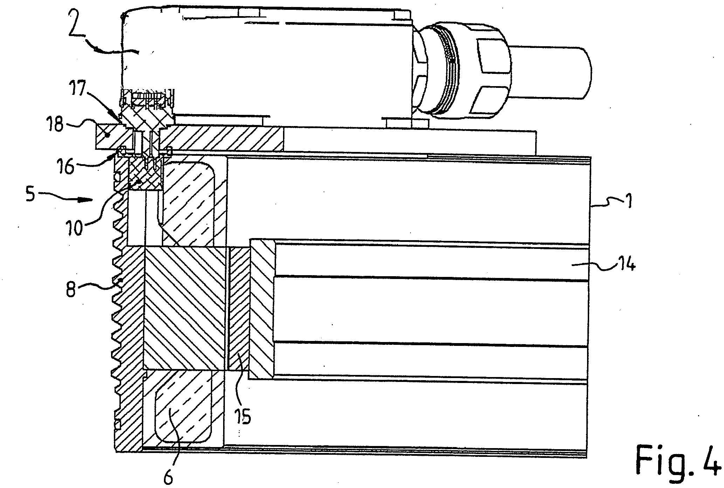

In den schematischen Schnittdarstellungen gemäß Figur 3 und 4 wird deutlich, dass die Vergussmasse bzw. der Verguss 7 flächig mit den Komponenten 4, 5, 8, 11, 12, 13 unmittelbaren Kontakt haben bzw. flächig mit diesem Verguss 7 verbunden sind.

Darüber hinaus werden v.a. in den Figuren 3 und 4 ein Teil des Rotors 14 sowie Magnete 15 verdeutlicht. Zwischen dem Rotor 14 bzw. den Magneten 15 ist ein Luftspalt gegenüber dem Stator 1 bzw. den Spulen 6 und deren Blechpacket vorhanden.

Ferner wird in den Figuren 3 bzw. 4 deutlich, dass die Buchsen 4, 5 bzw. die Platten 12, 13 nach außen bzw. an der Stirnseite des Stators 1 Dichtelemente 16 bzw. O-Ringe 16 aufweisen, die die Buchse 4, 5 bzw. Isolierkörper 9, 10 gegen eine Zwischenplatte 18 wirkungsvoll abdichten. Das bedeutet, dass die Ausführungsbeispiele gemäß den Figuren 3 und 4 sich gegenüber dem Ausführungsbeispiel gemäß Figur 1 durch das Vorhandensein einer stirnseitig am Stator 1 angeordneten Zwischenplatte 18 unterscheidet.

In vorteilhafter Weise ist eine Zwischenplatte 18 vorhanden, die einerseits eine stirnseitige Abdichtung des Stators 1 ermöglicht und andererseits zu einer Verfestigung bzw. Stabilisierung des Stators 1 führt. So ist die Zwischenplatte 1 als stirnseitiges Statorgehäuseelement ausgebildet. Ohne nähere Darstellung kann stirnseitig am Statorring 11 eine Dichtung bzw. ein O-Ring vorhanden bzw. angeordnet werden, der sich vollständig über den gesamten Umfang des Stators 1 erstreckt, das heißt auch durchgehend über die Bereiche der Buchsen 4, 5 bzw. Platten 12, 13, sodass eine vollständige Abdichtung, vorzugsweise mit Hilfe der Zwischenplatte 18, über den gesamten Umfang und ohne Unterbrechung realisierbar ist. Dies führt zu einer besonders vorteilhaften Abdichtung des Stators 1 gegenüber der Umgebung bzw. gegenüber möglicherweise im Betrieb vorhandenes Spritzwasser bzw. Kühlschmiermittel oder dergleichen. Hierfür kann beispielsweise der Ring 11 ohne nähere Darstellung bzw. im Unterschied zur Darstellung gemäß Figur 2 sich vollständig über die gesamte Umfangsfläche bzw. den gesamten Umfang des Stators 1 an der Stirnseite erstrecken. Das heißt, dass nicht wie dargestellt, der Ring 11 im Bereich der Platten 12, 13 unterbrochen bzw. sehr dünn ausgebildet ist, sondern dass der Ring 11 sich auch möglichst außenseitig bzw. in radialer Richtung nach außen betrachtet über die Bereiche der Platten 12, 13 bzw. Buchsen 4, 5 erstreckt, sodass in vorteilhafter Weise die Buchsen 4, 5 bzw. Platten 12, 13 in radialer Richtung betrachtet innerhalb der Dichtfläche bzw. eines entsprechenden O-Rings oder dergleichen angeordnet werden können.

Vor allem in den Figuren 3 und 4 wird auch deutlich, dass die Trennstelle bzw. die sog. erste Verbindungsvorrichtung gemäß der Erfindung, d.h. die Buchsen 4, 5 bzw. Körper 9, 10, sich innerhalb der Kontur bzw. Umrisslinie des Stators 1 bzw. innerhalb der Ober- bzw. Außenflächen des Stators 1 befinden. D.h. dass die diese Trennstelle sich innerhalb der Mantelfläche des Stators 1 bzw. des Statorgehäuses 8 und/oder Kühlgehäuses 8 sowie innerhalb der stirnseitigen Oberfläche des Statorrings 11 befindet.

Zugleich wird deutlich, dass eine vorteilhafte Abdichtung der Buchsen 4, 5 nach innen im Stator 1 durch den Kontakt bzw. das Um-/Eingießen des noch flüssigen Vergusses 11 um/mit den entsprechenden Komponenten in vorteilhafter Weise realisiert wird. Zudem wird durch das Vorhandensein der vorteilhaften 0-Ringe 16, 17 bzw. Mittelplatte 18 eine wirkungsvolle Abdichtung des Steckers 2 gegenüber dem Stator 1 realisiert. Diese Ausführungsbeispiele der Erfindung verwirklichen eine vollständige, flüssigkeitsdichte, lösbar verbindbare Trennstelle.

Darüber hinaus wird dadurch, dass sich die Trennstelle bzw. die erste Verbindungsvorrichtung 4, 5 bzw. Buchse 4, 5 innerhalb der Kontur bzw. innerhalb des Stators 1 befindet, eine vorteilhafte Fertigung des Stators 1 ermöglicht. Beispielsweise stören nicht wie beim Stand der Technik gemäß der DE 34 01 776 A1 aus dem Stator 1 herausragende Anschlusskabel für die Spulen 6 bzw. für einen nicht näher dargestellten Sensor.

Auch kann beispielsweise eine Nach- bzw. Endbearbeitung des Stators 1 durch Aufspannen auf einen Werkstücktisch einer Werkzeugmaschine ohne störende bzw. ohne überstehende, auskragende Komponente an der Stirnseite und/oder an der Mantelfläche des Stators 1 verwirklicht werden. So kann die endgültige Ausformung bzw. Spanbearbeitung und somit die Ausrichtung des Stators 1 in Bezug auf die Motorlängsachse besonders genau generiert werden.

So kann beispielsweise im Unterschied zu einem Stator gemäß der DE 102 35 632 B4 der Anmelderin der erfindungsgemäße Stator 1 beispielsweise auf einen Werkstücktisch einer spanerzeugenden Werkzeugmaschine montiert bzw. aufgespannt werden, wobei z.B. der eingegossene stirnseitige Statorring 11 und/oder das Gehäuse 8 eine vorteilhafte Auflage auf dem Werkstücktisch der entsprechenden Werkzeugmaschine bildet. Bei einem derart vorteilhaft aufgespannten bzw. montierten Stator 1 gemäß der Erfindung bzw. entsprechender Ausführungsformen kann dann eine planseitige Bearbeitung des gegenüberliegenden Bereiches bzw. der gegenüberliegenden Stirnseite des Stators 1 als auch eine exakte Nachbearbeitung bzw. orthogonale Ausrichtung der Mantelfläche des Stators 1 erfolgen. Hierdurch werden besonders genaue bzw. maßhaltige Statoren 1 gemäß der Erfindung realisierbar, was im Betrieb bzw. bei der Anwendung als Motorspindel, Drehtisch, Mehrachsendrehkopf oder dergleichen von besonderem Vorteil ist.

Grundsätzlich können erfindungsgemäße Werkzeugmaschineneinheiten in vorteilhafter Weise als Torquemotoren bzw. Direktantriebe bei Werkzeugmaschinen oder dergleichen eingesetzt werden.

Darüber hinaus kann gemäß einer vorteilhaften Ausführungsform des Steckers 2 bzw. der Buchsen 4 eine Anpassung an unterschiedliche, jedoch ggf. standardisierte Durchmesser des Stators 1 erfolgen. Beispielsweise sind die einzelnen Leistungsanschlussbuchsen 4 des Steckers 2 gelenkig miteinander verbunden, sodass diese an unterschiedliche Durchmesser des Stators 1 anpassbar sind und beispielweise bei modulartigen Werkzeugmaschineneinheiten in großer Stückzahl hergestellt und eingesetzt werden können. Hierbei kann auch die Buchse 5 mit einbezogen sein. Die entsprechend flexiblen Stecker 2 bzw. Buchsen 4 können beispielsweise durch die Stecker- bzw. Buchsenplatte 12 und/oder durch das Statorgehäuse 21 in vorteilhafter Weise festgelegt werden.

Die nicht nähere dargestellten Spulenenden der Spulen 6 können insbesondere bei einem mehrpoligen Stator 1 ebenfalls standardisiert in vorteilhafter Weise mit dem Isolierkörper 9 unlösbar verbunden und eingegossen werden. Beispielsweise werden die Spulenenden quer zur Einsteckrichtung des Steckers 2, insbesondere versetzt zueinander, angeordnet.

In Figur 3 wird zudem deutlich, dass je Anschluss ein Steckerzapfen vorgesehen ist, der in den Isolierkörper 9 der Buchse 4 bzw. 5 so weit hineinragt, dass dieser für die zwei dargestellten, verschiedenen Varianten, nämlich mit einer Zwischenplatte 8 oder ohne eine Zwischenplatte 18 (vgl. Figur 1 gegenüber Figuren 3 und 4), einen sicheren elektrischen Kontakt gewährleistet.

In Figur 5 ist schematisch der Stecker 2 perspektivisch abgebildet, wobei deutlich wird, dass ein Anschlusskabel 19 über einen Klemmhalter 20 mit einem Steckergehäuse 21 verbunden ist. Sowohl zwischen dem Kabel 19 als auch dem Halter 20 und dem Gehäuse 21 sind vorteilhafte Dichtungen realisiert und zudem ist das Gehäuse 21 ebenfalls in vorteilhafter Weise abgedichtet, sodass mit Hilfe der Dichtung 17 bzw. O-Ringen 17 eine vollständige dichte Trennstelle realisierbar ist. Analog enthält der Stecker 2 einen mehrpoligen Anschluss 34, der mit dem Kabel 31 verbunden ist und die Sensoranschlüsse ausbildet, wobei der Anschluss 34 über einen O-Ring 35 als Dichtung abgedichtet ist.

Vorzugsweise wird der Stecker 2 am Stator 1 bzw. an der Zwischenplatte 18 fest fixiert bzw. angeschraubt, sodass eine vorteilhafte Anpresskraft auf die entsprechenden Dichtelemente bzw. O-Ringe 16, 17 wirkt, wodurch eine sichere flüssigkeitsdichte Abdichtung realisiert wird.

Gemäß der Erfindung kann ein Stator 1 in vorteilhafter Weise hergestellt werden, nämlich ohne störende bzw. aus dem Stator 1 herausragende Kabel und auch ohne überstehende bzw. herausragende Komponenten, die über der Kontur des Stators 1 hinaus stehen. Dies ist auch bei der Montage und Demontage der Werkzeugmaschineneinheit von großem Vorteil.

Ein derartiger Stator 1 kann nämlich beispielsweise bei den sehr beengten Platzverhältnissen in einer modernen Werkzeugmaschine separat montiert und demontiert werden, ohne dass wie beim Stand der Technik die zum Teil derzeit über mehrere Meter lange, nicht lösbar mit dem Stator 1 verbundenen Anschlusskabel umständlich entsprechend innerhalb der Werkzeugmaschine eingefädelt und ausgefädelt werden müssen.

Gemäß den Ausführungsformen, die in der Zeichnung dargestellt sind, kann der Stecker vom Stator 1 getrennt und der Stator 1 dann entsprechend demontiert bzw. ein neuer bzw. ein reparierter Stator 1 montiert werden, und dies ohne großen Aufwand (ohne Kabel-Demontage und anschließender Kabel-Montage).

In einer vorteilhaften Ausführungsform ist der Stecker 2 und einstückig als eine einzige Baueinheit, die Leistungs- und Sensoranschlüsse enthält, ausgeführt. Das bedeutet, dass sowohl die elektrischen Leistungsanschlüsse als auch die Sensoranschlüsse in einer einzigen Baueinheit bzw. in einem einzigen Steckergehäuse 21 integriert sind, sodass lediglich ein einziger Steckvorgang zur Herstellung aller elektrischen Verbindungen mit dem Stator 1 ausreichend ist.

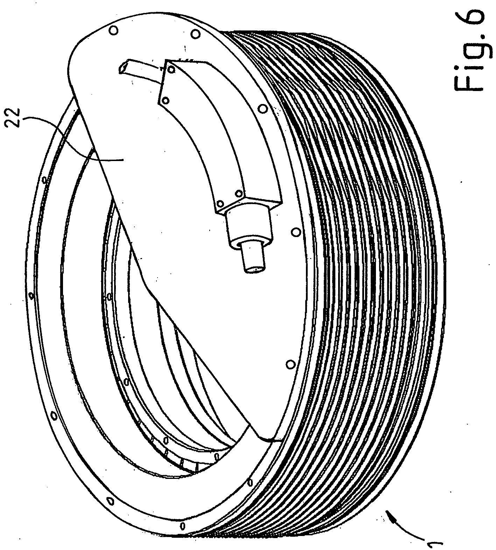

Die ausführungsgemäße Figur 6 zeigt einen Stator 1 mit einer Abschlussplatte 22. Die Abschlussplatte 22 deckt die eine Stirnseite des Stators 1 teilweise ab. Hierdurch sind die oben angeführten Vorteile der Kapselung aller Anschlusselemente, der Kraftübertragung bei der Befestigung des Motors in der Umgebungskonstruktion sowie die Variabilität zur Anpassung an unterschiedliche Erfordernisse der Umgebungskonstruktion erzielbar.

Der Stator 1 kann dabei so ausgestaltet werden wie in den vorbeschriebenen Ausführungsformen, wobei lediglich die Abdeckplatte 22 ergänzt wird.

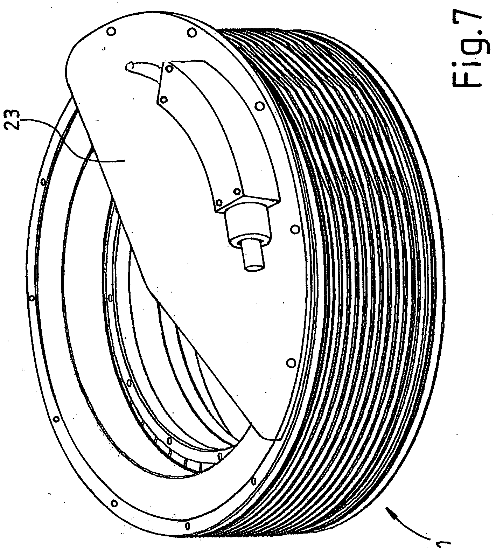

Figur 7 zeigt eine Ausführungsform entsprechend der Ausführungsform nach Figur 6, wobei hierbei eine dickere Abschlussplatte 23 vorgesehen ist. Die unterschiedliche Dicke zwischen der Ausführungsform gemäß Figur 6 und Figur 7 der Abschlussplatte veranschaulicht die variable Anpassung an die konstruktiven Erfordernisse der Umgebung.

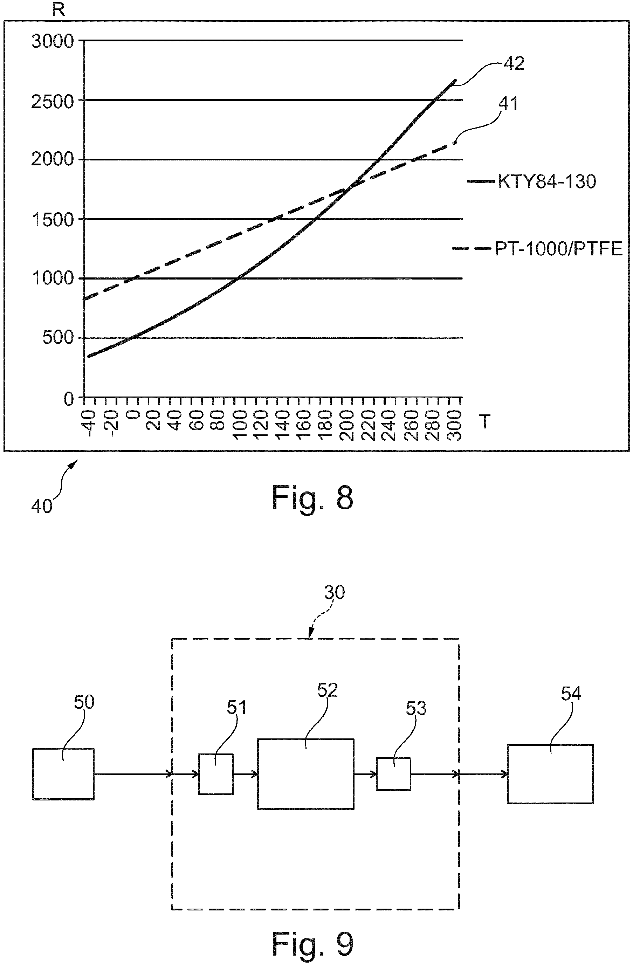

Figur 8 wiederum zeigt die Abhängigkeit des Widerstandes R von der Temperatur T in Form eines Diagramms 40 für verschiedene Thermowiderstände, genauer: zwei Kennlinien 41, 42 unterschiedlicher Thermowiderstände PT-1000 und KTY 84. Sind diese Kennlinien 41, 42 bekannt, kann das Signal eines PT-1000-Sensors in ein KTY 84 umgewandelt werden, indem die in den Stecker 2 integrierte Elektronikeinheit 30 die Widerstandswerte des gerade messenden Sensors 50 (hier ein PT-1000) mit dem Eingangsschaltkreis 51 bestimmt (vgl. Figur 9), diese mithilfe der Zuordnungsvorschrift gem. Kennlinie 42 in Figur 8 des gerade messenden Sensors in Temperaturwerte umwandelt, was vom Mikrocontroller 52 durchgeführt wird. Das Signal wird mithilfe eines A/D-Wandlers digitalisiert, um vom Mikrocontroller 52 verarbeitet zu werden. Die Daten werden schließlich mithilfe der anderen Kennlinie 41 aus Figur 8 wieder in Widerstandswerte gewandelt, sodass ein Ausgangsschaltkreis 53 so verändert wird, dass er diesen Widerstandswert annimmt. Die Daten wurden somit von digital zu analog zurückgewandelt. Dieser Widerstandswert kann gemessen werden, als es sich unmittelbar um den Ausgang eines Thermosensors handeln würde. Der Ausgangsschaltkreis 53 kann auch Daten an einen Frequenzinverter 54 zur Weiterverarbeitung oder an eine Kontrollvorrichtung weitergeben.

### Bezugszeichenliste

- 1: Stator
- 2: Stecker
- 4: Buchse
- 5: Buchse
- 6: Spule
- 7: Verguss
- 8: Gehäuse
- 9: Isolierkörper
- 10: Isolierkörper
- 11: Ring
- 12: Platte
- 13: Platte
- 14: Rotor
- 15: Magnet
- 16: O-Ring
- 17: O-Ring
- 18: Platte
- 19: Kabel
- 20: Halter
- 21: Gehäuse
- 22: Abschlussplatte
- 23: Abschlussplatte
- 30: Elektronikeinheit
- 31: Sensoranschlusskabel
- 32: Anschluss an Kontrollvorrichtung
- 33: Leistungsanschluss für Spulen
- 34: Sensoranschluss (mehrpolig)
- 35: O-Ring (Dichtung)
- 40: Abhängigkeit Widerstand-Temperatur
- 41: Kennlinie (PT-1000)
- 42: Kennlinie (KTY 84-130)
- 50: Temperatursensor (PT-1000)
- 51: Eingangsschaltkreis
- 52: Mikrocontroller
- 53: Ausgangsschaltkreis
- 54: Frequenzinverter
- R: Widerstand
- T: Temperatur
- U: Leistungsanschluss
- V: Leistungsanschluss
- W: Leistungsanschluss
- Y: Leistungsanschluss
- PE: Leistungsanschluss

## Patentansprüche

1. Verbindungsvorrichtung (2), insbesondere Stecker, einer Sensorauswerteeinheit und/oder einer elektrischen Energieversorgung zum elektrisch leitenden Verbinden der Sensorauswerteeinheit und/oder der Energieversorgung mit wenigstens einem Statorsensors und/oder wenigstens einem Spulenanschluss über eine weitere, erste Verbindungsvorrichtung (4, 5, 9, 10) einer Statoreinheit einer motorisch angetriebenen Werkzeugmaschineneinheit wie eines Mehrachsendrehkopfs, einer Motorspindel, eines Drehtischs oder dergleichen, wobei die Werkzeugmaschineneinheit die einen elektromagnetischen Stator (1) umfassende Statoreinheit und eine wenigstens eine um eine Drehachse drehbare Rotorwelle aufweisende Rotoreinheit (14) umfasst, wobei insbesondere wenigstens eine lösbar verbindbare Trennstelle zum Trennen und Verbinden der ersten Verbindungsvorrichtung (4, 5, 9, 10) von bzw. mit der Verbindungsvorrichtung (2) der Sensorauswerteeinheit und/oder der elektrischen Energieversorgung vorgesehen ist, welche innerhalb der Kontur des Stators (1) anordenbar ist, **dadurch gekennzeichnet, dass** die Verbindungsvorrichtung (2) der Sensorauswerteeinheit und/oder der elektrischen Energieversorgung eine Elektronikeinheit (30) zur Verarbeitung und/oder Umwandlung von Signalen des wenigstens einen Statorsensors (50) und/oder des wenigstens einen Spulenanschlusses aufweist, wobei insbesondere die Verbindungsvorrichtung (2) ein Gehäuse umfasst, in welches die Elektronikeinheit und/oder wenigstens teilweise die elektrischen Verbindungen des Spulenanschlusses integriert ist/sind.

2. Verbindungsvorrichtung (2) nach einem der vorgenannten Ansprüche, **dadurch gekennzeichnet, dass** die Elektronikeinheit (30) wie folgt ausgebildet ist:
- als Signalkonverter zum Umwandeln von Signalen und/oder
- als Begrenzer und/oder Dämpfer von Spannungsspitzen und/oder
- als Begrenzer generatorischer Spannungen.

3. Verbindungsvorrichtung (2) nach einem der vorgenannten Ansprüche, **dadurch gekennzeichnet, dass** die Elektronikeinheit (30) dazu ausgebildet ist, die Signale des wenigstens einen Statorsensors (50) gemäß einer in die Elektronikeinheit (30) vorgegebenen und/oder eingespeicherten und/oder einprogrammierten Zuordnungsvorschrift (40, 41, 42), insbesondere einer Zuordnungstabelle und/oder Kennlinie, umzuwandeln und die umgewandelten Signale auszugeben.

4. Verbindungsvorrichtung (2) nach einem der vorgenannten Ansprüche, **dadurch gekennzeichnet, dass** die Elektronikeinheit (30) einen Mikrocontroller (52) zur Durchführung der Verarbeitung und/oder Umwandlung der Signale umfasst.

5. Verbindungsvorrichtung (2) nach einem der vorgenannten Ansprüche, **dadurch gekennzeichnet, dass** die Elektronikeinheit (30) dazu ausgebildet ist, die Eingangssignale der Elektronikeinheit (30) des wenigstens einen Temperatursensors (50), welche insbesondere in Form von Widerstandswerten (R) vorliegen, in Temperaturen (T) umzuwandeln und diese gemäß der Zuordnungsvorschrift als Ausgangssignale, insbesondere in Form von Widerstandswerten (R), umzuwandeln.

6. Verbindungsvorrichtung (2) nach einem der vorgenannten Ansprüche, **dadurch gekennzeichnet, dass** die Elektronikeinheit (30) dazu ausgebildet ist, den Widerstandswert des wenigstens einen Statorsensors (50) und/oder den Widerstandswert der Trennstelle zu bestimmen.

7. Verbindungsvorrichtung (2) nach einem der vorgenannten Ansprüche, **dadurch gekennzeichnet, dass** ein Temperatursensor und/oder ein Widerstandssensor vorgesehen ist, um eine Temperaturerhöhung und/oder eine Widerstanderhöhung an der Trennstelle, insbesondere bedingt durch erhöhte Korrosion an elektrisch leitenden Teilen, zu detektieren.

8. Verbindungsvorrichtung (2) nach einem der vorgenannten Ansprüche, **dadurch gekennzeichnet, dass** die Elektronikeinheit (30) einen Ausgangsschaltkreis (53) aufweist, dessen Widerstandswert als Ausgangssignal entsprechend veränderbar ist, wobei der Ausgangsschaltkreis zur Einstellung des Widerstandswertes insbesondere ein digitales Potentiometer umfasst.

9. Verbindungsvorrichtung (2) nach einem der vorgenannten Ansprüche, **dadurch gekennzeichnet, dass** die Elektronikeinheit (30) dazu ausgebildet ist, Messdaten und/oder Kontrollparameter und/oder Kontrollbefehle an eine Kontrolleinheit, insbesondere eine Maschinensteuerung und/oder Maschinenregelung, zu übermitteln, um eine Motorschutzfunktion auszuüben, sodass anhand der übermittelten Messdaten, Parameter oder Befehle die Maschinensteuerung bzw. Regelung in den Betrieb eingreifen kann.

10. Sensorauswerteinheit mit einer Verbindungsvorrichtung (2) nach einem der vorgenannten Ansprüche.

11. Energieversorgungseinheit mit einer Verbindungsvorrichtung (2) nach einem der vorgenannten Ansprüche.

12. Motorisch angetriebene Werkzeugmaschineneinheit wie ein Mehrachsendrehkopf, eine Motorspindel, ein Drehtisch oder dergleichen mit einer einen elektromagnetischen Stator (1) umfassenden Statoreinheit und einer wenigstens eine um eine Drehachse drehbare Rotorwelle aufweisenden Rotoreinheit (14), wobei die Statoreinheit eine erste Verbindungsvorrichtung (4, 5, 9, 10) zum elektrisch leitenden Verbinden wenigstens eines Statorsensors und/oder wenigstens eines Spulenanschlusses und mit einer zweiten Verbindungsvorrichtung (2) einer Sensorauswerteeinheit und/oder einer elektrischen Energieversorgung umfasst, wobei wenigstens eine lösbar verbindbare Trennstelle zum Trennen und Verbinden der ersten Verbindungsvorrichtung (4, 5, 9, 10) mit der zweiten Verbindungsvorrichtung (2) vorgesehen ist, wobei die lösbar verbindbare Trennstelle und/oder die erste Verbindungsvorrichtung (4, 5, 9, 10) innerhalb der Kontur des Stators (1) angeordnet ist, **dadurch gekennzeichnet, dass** die zweite Verbindungsvorrichtung (2) als Verbidungsvorrichtung nach einem der vorgenannten Ansprüche ausgebildet ist, wobei der Statorsensor insbesondere als Temperatursensor, der / die jeweils auf einer der Statorwicklungen angeordnet ist und/oder als Begrenzer und/oder Dämpfer von Spannungsspitzen und/oder als Begrenzer generatorischer Spannungen und/oder als Signalkonverter zum Umwandeln von Signalen ausgebildet ist.

13. Werkzeugmaschineneinheit nach einem der vorgenannten Ansprüche, **dadurch gekennzeichnet, dass** an wenigstens einer Stirnseite des Stators (1) eine Abschlussplatte (22, 23) vorgesehen ist, die die Stirnseite des Stators (1) wenigstens teilweise abdeckt und zur Kapselung des Motors gegenüber der Umgebungskonstruktion und/oder zur Kraft- beziehungsweise Drehmomentübertragung an die Umgebungsbauteile und/oder zur variablen Anpassung an die Umgebungskonstruktion verwendbar ist.

14. Werkzeugmaschineneinheit nach einem der vorgenannten Ansprüche, **dadurch gekennzeichnet, dass** die zweite Verbindungsvorrichtung (2) ein Gehäuse umfasst, in welches die Elektronikeinheit und/oder wenigstens teilweise die elektrischen Verbindungen des Spulenanschlusses integriert ist/sind.

15. Werkzeugmaschineneinheit nach einem der vorgenannten Ansprüche, **dadurch gekennzeichnet, dass** der wenigstens eine Statorsensor (50) zum kontinuierlichen Messen ausgebildet ist.
